(19) Europäisches Patentamt European Patent Office Office européen des brevets

(11) **EP 3 662 152 B1**

(12) **EUROPÄISCHE PATENTSCHRIFT**

(45) Veröffentlichungstag und Bekanntmachung des Hinweises auf die Patenterteilung:
**29.04.2026 Patentblatt 2026/18**

(21) Anmeldenummer: **18746146.2**

(22) Anmeldetag: **24.07.2018**

(51) Internationale Patentklassifikation (IPC):
*F02D 41/00* (2006.01)    *F02B 37/18* (2006.01)
*F02B 37/24* (2006.01)

(52) Gemeinsame Patentklassifikation (CPC):
**F02D 41/0007; F02B 37/18; F02B 37/24;**
Y02T 10/12

(86) Internationale Anmeldenummer:
**PCT/EP2018/069983**

(87) Internationale Veröffentlichungsnummer:
**WO 2019/025231 (07.02.2019 Gazette 2019/06)**

(54) **VERFAHREN ZUM BESTIMMEN EINES GRUNDLADEDRUCKS EINES GASFÜHRUNGSSYSTEMS EINER VERBRENNUNGSKRAFTMASCHINE UND MOTORSTEUERUNG ZUM DURCHFÜHREN EINES SOLCHEN VERFAHRENS**

METHOD FOR DETERMINING A BASIC BOOST PRESSURE OF A GAS CONDUCTING SYSTEM OF AN INTERNAL COMBUSTION ENGINE, AND ENGINE CONTROLLER FOR CARRYING OUT A METHOD OF THIS TYPE

PROCÉDÉ SERVANT À DÉFINIR UNE PRESSION DE SURALIMENTATION DE BASE D'UN SYSTÈME D'ACHEMINEMENT DE GAZ D'UN MOTEUR À COMBUSTION INTERNE ET COMMANDE DE MOTEUR SERVANT À METTRE EN OEUVRE UN PROCÉDÉ DE CE TYPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2017 DE 102017213497**

(43) Veröffentlichungstag der Anmeldung:
**10.06.2020 Patentblatt 2020/24**

(73) Patentinhaber: **Volkswagen Aktiengesellschaft 38440 Wolfsburg (DE)**

(72) Erfinder: **HEINKEN, Sebastian 38106 Braunschweig (DE)**

(56) Entgegenhaltungen:
WO-A1-03/027464      WO-A1-2014/125185
WO-A2-2008/142058    FR-A1- 2 921 114
US-A1- 2009 094 009   US-A1- 2011 098 876
US-A1- 2015 101 578

- **"INTERNAL COMBUSTION ENGINE FUNDAMENTALS.", 1 January 1988, NEW YORK, MCGRAW-HILL., US, ISBN: 978-0-07-100499-2, article JOHN B HEYWOOD: "Internal combustion engine fundamentals", pages: 250 - 255, XP055514274, 022039**

EP 3 662 152 B1

## Beschreibung

Die Erfindung betrifft ein Verfahren zum Bestimmen eines Grundladedrucks eines Gasführungssystems einer Verbrennungskraftmaschine und eine Motorsteuerung zum Durchführen eines solchen Verfahrens. Insbesondere betrifft die Erfindung ein Verfahren zum Bestimmen eines Grundladedrucks eines Gasführungssystems einer Verbrennungskraftmaschine eines Kraftfahrzeugs, beispielsweise eines Ottomotors oder eines Dieselmotos eines Kraftfahrzeugs, und eine Motorsteuerung zum Durchführen eines solchen Verfahrens.

Bei modernen Motoren von Kraftfahrzeugen spielt die Motorfüllung eine bedeutende Rolle, da über diese die Effizienz des Motors deutlich beeinflusst werden kann. Typischerweise weisen die Motoren daher Stellglieder zum Einregeln der Füllung (füllungsstellende Organe) auf. Beispiele für füllungsstellende Organe der Motoren sind eine Drosselklappe und ein Turbolader, vorzugsweise ein Turbolader mit Wastegate oder ein Variable-Turbinengeometrie-Lader (VTG-Lader).

Die Drosselklappe und der Turbolader können gleichzeitig, also im Parallelbetrieb, verstellt werden. Das bedeutet unter Umständen, dass beide Stellglieder aktiv gegeneinander arbeiten. So kann es vorkommen, dass das Ladedruckniveau durch den Turbolader erhöht wird und die Drosselklappe drosselt, d.h. dagegen arbeitet, was zu einem Mehrverbrauch des Aggregats führt. Diesen Betrieb gilt es zu verhindern.

Kann man die beiden Regler jedoch eindeutig voneinander abgrenzen (De- und Aktivierung), arbeitet der Turbolader erst dann, wenn der Wunsch an mehr Füllung nicht mehr durch weiteres Öffnen der Drosselklappe gestellt werden kann. Diese Übergabe der Regler kann an der Grenze des Grundladedrucks stattfinden. Unterhalb dieser Druckschwelle arbeitet die Drosselklappe, oberhalb der Ladedruckregler mittels Turbolader.

Es ist daher notwendig, den gegenwärtigen Grundladedruck zu bestimmen. Dies kann beispielsweise durch eine Modellierung des Grundladedrucks, wie sie in der DE 102 43 268 A1 erwähnt wird, erfolgen. Die DE 102 35 013 A1 beschreibt ein Verfahren zum Bestimmen eines Ladedrucksollwerts mittels eines drehzahlabhängigen Grundwerts.

Die US 2011 / 0098876 A1 offenbart ein Verfahren zum Diagnostizieren eines Ansaugtrakts eines Verbrennungsmotors, der einen Verdichter aufweist. Bei dem Verfahren wird überprüft, ob mindestens eine vorgegebene Aktivierungsbedingung erfüllt ist. Es wird ein Ladedruck stromabwärts des Verdichters erfasst oder ermittelt. Eine Adaptionskennlinie oder ein Adaptionskennfeld wird in Abhängigkeit von einer Drehzahl der Verbrennungsmotors und dem Ladedruck angepasst, wenn die mindestens eine Aktivierungsbedingung erfüllt ist. Es wird ein Gradient ermittelt, der repräsentativ für eine Steigung der Adaptionskennlinie oder des Adaptionskennfeldes ist. Aus dem ermittelten Gradienten werden Rückschlüsse auf einen Fehler im Ansaugtrakt der Brennkraftmaschine gezogen.

Darüber hinaus wird in US 2015/0101578 A1 ein Verfahren zur Schätzung eines Ladedrucks eines Turboladers beschrieben. Eine Drosselklappentemperatur wird als Funktion von Motorbetriebsparametern geschätzt. Ein Ansaugluftmassenstrom und ein Abgasmassenstrom werden in Abhängigkeit von der Drosselklappentemperatur geschätzt. Ein Turbineneinlassdruck und ein Turbinenauslassdruck werden als Funktion der Motorbetriebsparameter geschätzt. Die Turbinendrehzahl wird als Funktion des Ansaugluftmassenstroms, des Abgasmassenstroms und des Turbinen ein- und -auslassdrucks geschätzt. Der Ladedruck wird in Abhängigkeit von der Turbinendrehzahl geschätzt. Ein Steuerungssignal zum Steuern des Turboladers wird basierend auf dem geschätzten Ladedruck erzeugt.

Die bekannten Grundladedruckmodelle besitzen jedoch nur mäßige Genauigkeit. Da der Bereich des Grundladedrucks gewisse Unschärfen mit sich bringt, erfolgt eine Bedatung in der Software, die ein gutes Fahrverhalten sicherstellt, üblicherweise mit dem Kompromiss, dass beide Regler parallel arbeiten und dies etwas Mehrverbrauch bedeutet. Dieser Kompromiss führt insbesondere bei Motoren, die auf dem Miller-Brennverfahren basieren, zu Problemen, da der Grundladedruck das Motorkonzept deutlich beeinflusst.

Aufgabe der vorliegenden Erfindung ist es, ein Verfahren und eine Motorsteuerung bereitzustellen, die die oben genannten Nachteile wenigstens teilweise überwinden.

Diese Aufgabe wird durch das erfindungsgemäße Verfahren zum Bestimmen des Grundladedrucks nach Anspruch 1, die Motorsteuerung nach Anspruch 13, eine Verbrennungskraftmaschine nach Anspruch 14 und ein Kraftfahrzeug mit einer Verbrennungskraftmaschine nach Anspruch 15 gelöst.

Nach einem ersten Aspekt betrifft die Erfindung ein Verfahren zum Bestimmen eines Grundladedrucks eines Gasführungssystems einer Verbrennungskraftmaschine mit einem Turbolader, der einen Verdichter, eine Turbine, eine den Verdichter und die Turbine verbindende Welle und ein Turboladerstellglied zum Variieren einer Strömungsgeschwindigkeit durch die Turbine oder eines Druckverhältnisses über der Turbine aufweist, und wobei das Gasführungssystem eine in Strömungsrichtung nachfolgend des Verdichters angeordnete Drosselklappe umfasst, umfassend:

> Berechnen eines Abgasgegendrucks bei geöffneter Turboladerstellgliedposition, wobei die Strömungsgeschwindigkeit durch oder das Druckverhältnis über der Turbine in der geöffneten Turboladerstellgliedposition minimal ist, und wobei der Abgasgegendruck ein Druck vor der Turbine ist; und
> Bestimmen des Grundladedrucks in Abhängigkeit des berechneten Abgasgegendrucks bei geöffneter Turboladerstellgliedposition.

Nach einem zweiten Aspekt betrifft die Erfindung eine Motorsteuerung für eine Verbrennungskraftmaschine mit einem Gasführungssystem mit einem Turbolader, der einen Verdichter, eine Turbine, eine den Verdichter und die Turbine verbindende Welle und ein Turboladerstellglied zum Variieren einer Strömungsgeschwindigkeit durch die Turbine der Verbrennungskraftmaschine oder eines Druckverhältnisses über der Turbine aufweist, und wobei das Gasführungssystem eine in Strömungsrichtung nachfolgend des Verdichters angeordnete Drosselklappe umfasst, die dazu ausgebildet ist, ein Verfahren zum Bestimmen eines Grundladedrucks des Gasführungssystems der Verbrennungskraftmaschine nach dem ersten Aspekt durchzuführen, das umfasst:

Berechnen eines Abgasgegendrucks bei geöffneter Turboladerstellgliedposition, wobei die Strömungsgeschwindigkeit durch oder das Druckverhältnis über der Turbine in der geöffneten Turboladerstellgliedposition minimal ist; und
Bestimmen des Grundladedrucks in Abhängigkeit des berechneten Abgasgegendrucks bei geöffneter Turboladerstellgliedposition.

Nach einem dritten Aspekt betrifft die Erfindung eine Verbrennungskraftmaschine mit einer Motorsteuerung nach dem zweiten Aspekt.

Nach einem vierten Aspekt betrifft die Erfindung ein Kraftfahrzeug mit einer Verbrennungskraftmaschine nach dem dritten Aspekt.

Weitere vorteilhafte Ausgestaltungen der Erfindung ergeben sich aus den Unteransprüchen und der folgenden Beschreibung bevorzugter Ausführungsbeispiele der vorliegenden Erfindung. Die vorliegende Erfindung betrifft ein Verfahren zum Bestimmen eines Grundladedrucks eines Gasführungssystems einer Verbrennungskraftmaschine mit einem Turbolader, der einen Verdichter, eine Turbine, eine den Verdichter und die Turbine verbindende Welle und ein Turboladerstellglied zum Variieren einer Strömungsgeschwindigkeit durch die Turbine oder eines Druckverhältnisses über der Turbine aufweist. Das Gasführungssystem umfasst weiterhin eine Drosselklappe, eine Ansaugleitung, eine Abgasleitung und weitere gasführende Komponenten.

Die Ansaugleitung kann mit der Verbrennungskraftmaschine, beispielsweise einem Ottomotor, einem nach dem Miller-Verfahren arbeitenden Verbrennungsmotor oder einem Dieselmotor, verbunden sein, um diese mit Frischluft zu versorgen. In der Ansaugleitung sind der Verdichter des Turboladers und in Strömungsrichtung nachfolgend die Drosselklappe aufgenommen , wobei ein Druck nach dem Verdichter bzw. vor der Drosselklappe als Ladedruck bezeichnet wird. Die Abgasleitung kann mit der Verbrennungskraftmaschine verbunden sein, um Abgas aus dieser abzuleiten. Der Grundladedruck ist der Ladedruck, der herrscht, wenn die Drosselklappe maximal geöffnet ist und sich das Turboladerstellglied in der geöffneten Turboladerstellgliedposition befindet, in der eine Strömungsgeschwindigkeit durch die Turbine oder ein Druckverhältnis über der Turbine minimal ist. Entsprechend kann sich der Grundladedruck von einem aktuellen Ladedruck unterscheiden, wenn sich die Turbine in einer anderen Turboladerstellgliedposition als in der geöffneten Turboladerstellgliedposition befindet. Der Grundladedruck kann weiterhin von einer Turbinengeometrie der Turbine des Turboladers abhängig sein. Mit anderen Worten definiert sich der Grundladedruck durch den Druck, der sich vor der Drosselklappe einstellt, wenn der Turbolader nicht angesteuert wird. Näherungsweise beschreibt er also eine Saugervolllast mit der Randnotiz, dass der Turbolader auch ohne Ansteuerung eine gewisse Verdicherleistung erzeugt. Dies hebt den Grundladedruck also abhängig von der Turboladergeometrie mehr oder weniger über einen Umgebungsdruck.

Gemäß dem erfindungsgemäßen Verfahren wird ein Abgasgegendruck bei geöffneter Turboladerstellgliedposition berechnet, insbesondere modelliert, wobei die Strömungsgeschwindigkeit durch oder das Druckverhältnis über der Turbine in der geöffneten Turboladerstellgliedposition minimal ist. In der geöffneten Stellgliedposition kann ein Ladedruckanteil, der durch den Turbolader bedingt ist, minimiert werden. Zum Beispiel kann in der geöffneten Stellgliedposition ein Strömungsquerschnitt durch und/oder um die Turbine maximal sein, wodurch die Strömungsgeschwindigkeit minimiert werden kann und gegebenenfalls der Ladedruckanteil des Turboladers minimiert werden kann. Der Abgasgegendruck ist der Druck vor der Turbine.

Gemäß dem erfindungsgemäßen Verfahren wird dann der Grundladedruck in Abhängigkeit des berechneten Abgasgegendrucks bei geöffneter Turboladerstellgliedposition bestimmt. Der Grundladedruck kann weiterhin von aktuell herrschenden Bedingungen des Gasführungssystems abhängig sein. Das Bestimmen des Grundladedrucks wird weiter unten im Detail erläutert.

Durch den Abgasgegendruck bei geöffneter Turboladerstellgliedposition, der für die OffenPosition des Turboladers bestimmt wurde, kann der Grundladedruck sehr zuverlässig bestimmt werden.

In manchen Ausführungsbeispielen kann der Turbolader ein Variable-Turbinengeometrie-Lader (VTG-Lader) mit verstellbaren Leitschaufeln als Stellglieder sein und die Leitschaufeln können sich in der geöffneten Turboladerstellgliedposition in der steilsten Stellung befinden. Alternativ oder zusätzlich kann der Turbolader ein Wastegate mit einem Ventil als Stellglied aufweisen, das bei geöffneter Turboladerstellgliedposition vollständig geöffnet ist.

In manchen Ausführungsbeispielen kann der Abgasgegendruck mittels eines Abgasgegendruckmodells bei geöffneter Turbinenstellgliedposition oder mittels eines Wastegate-Modells bei geöffneter Turbinenstellgliedposition bestimmt werden. Insbesondere kann der Abgasgegendruck im Fall, dass der Turbolader ein Variable-Turbinengeometrie-Lader mit verstellbaren Leitschaufeln als Stellglieder ist, mittels eines Abgasgegendruckmodells, dem eine Turbine mit Leitschaufeln in der steilst möglichen Stellung zugrunde liegt, bestimmt werden. Im Fall, dass der Turbolader ein Wastegate mit einem Ventil als Stellglied aufweist, kann der Abgasgegendruck mittels eines Wastegate-Modells, dem ein Turbolader mit vollständig geöffnetem Wastegate zugrunde liegt, bestimmt werden.

In manchen Ausführungsbeispielen kann gemäß dem Verfahren weiterhin in Abhängigkeit des modellierten Abgasgegendrucks bei geöffneter Turboladerstellgliedposition eine Turbinendrehzahl bei geöffneter Turboladerstellgliedposition bestimmt werden. Der Grundladedruck kann dann in Abhängigkeit der bestimmten Turbinendrehzahl bei geöffneter Turboladerstellgliedposition bestimmt werden.

In manchen Ausführungsbeispielen kann die Turbinendrehzahl bestimmt werden, indem in Abhängigkeit des modellierten Abgasgegendrucks bei geöffneter Turboladerstellgliedposition ein Druckverhältnisses über der Turbine bei geöffneter Turboladerstellgliedposition bestimmt wird, ein Abgasmassenstrom (auch Turbinenmassenstrom genannt) bei geöffneter Turboladerstellgliedposition bestimmt wird und die Turbinendrehzahl in Abhängigkeit des bestimmten Druckverhältnisses und des bestimmten Abgasmassenstroms bestimmt wird. Das Druckverhältnis ist beispielsweise modelliert. Auch der Abgasmassenstrom kann modelliert sein. Anstelle des Abgasmassenstroms kann ein normierter Abgasmassenstrom bestimmt werden und zum Bestimmen der Turbinendrehzahl verwendet werden. Zum Bestimmen des normierten Abgasmassenstroms kann eine Abgastemperatur bei geöffneter Turboladerstellgliedposition bestimmt, insbesondere modelliert, werden, und der normierte Abgasmassenstrom $\dot{m}_{A,norm}$ aus dem Abgasmassenstrom $\dot{m}_A$ und der Abgastemperatur $T_A$ auf Grundlage der Proportionalität

$$\dot{m}_{A,norm} \approx \dot{m}_A \sqrt{T_A}$$

berechnet werden.

In manchen Ausführungsbeispielen kann die Turbinendrehzahl mittels eines Drehzahlmodells, insbesondere eines Turbinenkennfelds, bestimmt werden. Das Turbinenkennfeld kann ein Turbinenkennfeld sein, das sich über dem Druckverhältnis bei der geöffneten Turboladerstellgliedposition und dem Abgasmassenstrom aufspannen lässt. Ausgang ist dann die Turbinendrehzahl bei geöffneter Turboladerstellgliedposition. Zusätzlich können die Eingänge auf die Abgastemperatur normiert werden. Durch den modellierten Abgasgegendruck bei der geöffneten Turboladerstellgliedposition, der Teil des Druckverhältnisses ist, kann der Grundladedruck zuverlässig bestimmt werden.

Die Turbinendrehzahl kann somit von einem Abgasgegendruck bei geöffneter Turboladerstellgliedposition, dem Druck nach der Turbine, dem Abgasmassenstrom, der Abgastemperatur und der geöffneten Turboladerstellgliedposition abhängig sein.

In manchen Ausführungsbeispielen kann die Verdichterdrehzahl bei geöffneter Turboladerstellgliedposition einer Turbinendrehzahl bei geöffneter Turboladerstellgliedposition entsprechen. Dies ergibt sich daraus, dass der Verdichter und die Turbine fest über die Welle miteinander gekoppelt sind und daher immer gleich schnell drehen. Somit kann beispielsweise mittels eines Drehzahlmodells auf der Turbinenseite beispielsweise durch Berechnung eines Abgasgegendruckmodells bei offener Turboladestellgliedposition die folgende Bilanz zur Verdichterseite gemacht werden:

$$n_T = n_V,$$

wobei $n_T$ die Drehzahl der Turbine (Turbinendrehzahl) und $n_V$ die Drehzahl des Verdichters (Verdichterdrehzahl) ist. Besonderheit ist an der Stelle, dass die Turbinendrehzahl und folglich die Verdichterdrehzahl dem Zustand eines offenen Turboladers entspricht und nicht zwangsläufig dem aktuellen Wert der Turbinen- bzw. Verdichterdrehzahl.

In manchen Ausführungsbeispielen kann bei dem Verfahren eine Verdichterdrehzahl bei geöffneter Turboladerstellgliedposition in Abhängigkeit des modellierten Abgasgegendrucks bei geöffneter Turboladerstellgliedposition bestimmt werden, insbesondere auf eine andere als die oben beschriebene Weise, beispielsweise über ein geeignetes Kennfeld. Der Grundladedruck kann dann in Abhängigkeit der bestimmten Verdichterdrehzahl bei geöffneter Turboladerstellgliedposition bestimmt werden. Wiederum ermöglicht die Verwendung des modellierten Abgasgegendrucks eine zuverlässige Bestimmung des Grundladedrucks.

In manchen Ausführungsbeispielen kann gemäß dem Verfahren ein Frischluftmassenstrom bei geöffneter Turboladerstellgliedposition erhalten werden und in Abhängigkeit der Verdichterdrehzahl bei geöffneter Turboladerstellgliedposition und des Frischluftmassenstroms ein Druckverhältnis bei geöffneter Turboladerstellgliedposition über dem Verdichter bestimmt werden. Der Grundladedruck kann dann in Abhängigkeit des Druckverhältnisses bestimmt werden. Anstelle des Frischluftmassenstroms kann ein normierter Frischluftmassenstrom bestimmt werden und zum Bestimmen des Grundladedrucks verwendet werden. Zum Bestimmen des normierten Frischluftmassenstroms kann eine Frischlufttemperatur bei geöffneter Turboladerstellgliedposition bestimmt werden, und der normierte Frischluftmassenstrom $\dot{m}_{FL,norm}$ aus dem Frischluftmassenstrom $\dot{m}_{FL}$ und der Frischlufttemperatur $T_{FL}$ auf Grundlage der Proportionalität

$$\dot{m}_{FL,norm} \approx \dot{m}_{FL} \sqrt{T_{FL}}$$

berechnet werden.

In manchen Ausführungsbeispielen kann der Frischluftmassenstrom gemessen werden. Zum Beispiel kann der Frischluftmassenstrom mit einem Luftmassensensor, vorzugsweise einem Heißfilm-Luftmassenmesser (HFM), gemessen werden. Alternativ kann der Frischluftmassenstrom modelliert werden, beispielsweise mittels einer druckbasierten Füllungserfassung.

In manchen Ausführungsbeispielen kann das Druckverhältnis mittels eines Verdichterkennfelds bestimmt werden. Mittels der errechneten Verdichterdrehzahl und dem Frischluftmassenstrom kann durch Zuhilfenahme des Verdichterkennfelds das Druckverhältnis über dem Verdichter bestimmt werden.

In manchen Ausführungsbeispielen kann gemäß dem Verfahren ein Vor-Verdichter-Druck vor dem Verdichter bestimmt werden. Der Grundladedruck kann dann in Abhängigkeit des Druckverhältnisses bei geöffneter Turboladerstellgliedposition und des bestimmten Vor-Verdichter-Drucks bestimmt werden. Insbesondere wird das bestimmte Druckverhältnis über dem Verdichter mit dem Vor-Verdichter-Druck multipliziert, um den Grundladedruck zu erhalten, also den Druck nach dem Verdichter bei nicht angesteuertem Turboladerstellglied.

Der Vor-Verdichter-Druck kann basierend auf dem Umgebungsdruck bestimmt werden. Zum Beispiel kann der Druck vor dem Verdichter über ein Modell abgebildet sein, welches auf dem Umgebungsdruck basiert. Von diesem kann ein Druckverlust modelliert und abgezogen werden, der einem passiven Strömungswiderstand eines Luftfilters in der Ansaugleitung entspricht.

Der Grundladedruck kann somit von der Verdichterdrehzahl bei geöffneter Turboladerstellgliedposition, dem Druck vor dem Verdichter, dem Frischluftmassenstrom und der Frischlufttemperatur abhängig sein.

Durch eine zuverlässige Bestimmung des Grundladedrucks kann ein Ladedruckvorhalt reduziert werden, weil der Turbolader erst dann zugeschaltet wird, wenn die Drosselklappe nicht mehr Moment stellen kann. Folglich wird weniger angedrosselt, wodurch ein Mehrverbrauch reduziert werden kann.

Zusammenfassend kann das Verfahren auf den folgenden Schritten basieren:

- Zunächst wird der Abgasgegendruck bei geöffneter Turboladerstellgliedposition bestimmt.
- Anschließend kann die Turbinendrehzahl bestimmt werden. Diese kann mittels des Turbinenkennfelds über die Eingangsgrößen Druckverhältnis (offen) über der Turbine bei geöffneter Turboladerstellgliedposition sowie Abgasmassenstrom ermittelt werden. Das zur Drehzahlbestimmung verwendete Druckverhältnis ist also das Druckverhältnis in dem Fall, dass die Stellung einer variablen Turbinengeometrie oder der Öffnungsgrad eines Wastegates (Bypass um die Turbine), welche in die Berechnung des Druckverhältnisses eingehen, fest auf einen voll geöffneten Wert gesetzt sind. Es wird demnach vorzugsweise nicht die aktuell vorliegende Turbinendrehzahl ermittelt, sondern die Turbinendrehzahl (offen) für den voll geöffneten Zustand der VTG (variable Turbinengeometrie) oder des Wastegates. Der Abgasmassenstrom und das Druckverhältnis über der Turbine können modelliert werden.
- Dann kann die Turbinendrehzahl (offen) auf die Verdichterdrehzahl (offen) übertragen werden.
- Danach kann das Druckverhältnis über den Verdichter bestimmt werden. Dieses kann mittels eines Verdichterkennfelds, in welches der Frischluftmassenstrom (modelliert oder gemessen) und die Verdichterdrehzahl (offen) bei der geöffneten Turboaderstellgliedposition eingehen.
- Abschließend wird der Grundladedruck bestimmt. Dieser kann sich aus dem Druck vor dem Verdichter (korrigierter Umgebungsdruck) und dem Druckverhältnis (offen) über dem Verdichter ergeben.

Die vorliegende Erfindung modelliert eine Grenze zwischen dem Einsatz des Turboladers und dem Einsatz der Drosselklappe sehr zuverlässig und bildet thermodynamische Randbedingungen sehr gut ab. Dies stabilisiert die Füllungsregelung im Überweg und mindert den Verbrauch.

Die vorliegende Erfindung betrifft weiterhin eine Motorsteuerung für eine Verbrennungskraftmaschine mit einem Gasführungssystem mit einem Turbolader, der einen Verdichter, eine Turbine, eine den Verdichter und die Turbine verbindende Welle und ein Turboladerstellglied zum Variieren einer Strömungsgeschwindigkeit durch oder ein

Druckverhältnis über der Turbine aufweist, und und wobei das Gasführungssystem eine in Strömungsrichtung nachfolgend des Verdichters angeordnete Drosselklappe umfasst. Das Gasführungssystem kann wie oben beschrieben ausgebildet sein. Die Motorsteuerung ist dazu ausgebildet, ein Verfahren zum Bestimmen eines Grundladedrucks des Gasführungssystems der Verbrennungskraftmaschine durchzuführen, bei dem ein Abgasgegendruck bei geöffneter Turboladerstellgliedposition berechnet wird, wobei die Strömungsgeschwindigkeit durch oder das Druckverhältnis über der Turbine in der geöffneten Turboladerstellgliedposition minimal ist, und wobei der Abgasgegendruck ein Druck vor der Turbine ist, und der Grundladedruck in Abhängigkeit des berechneten Abgasgegendrucks bei geöffneter Turboladerstellgliedposition bestimmt wird. Die Motorsteuerung ist insbesondere dazu ausgebildet, in Abhängigkeit des Abgasgegendrucks eine Turbinendrehzahl zu bestimmen, die Turbinendrehzahl auf eine Verdichterdrehzahl zu übertragen und den Grundladedruck in Abhängigkeit der Verdichterdrehzahl zu bestimmen. Vorzugsweise kann die Motorsteuerung dazu ausgebildet sein, das oben beschriebene Verfahren zum Bestimmen des Grundladedrucks durchzuführen.

Die Motorsteuerung kann einen Prozessor, insbesondere einen Mikroprozessor, zum Ausführen des

oben beschriebenen Verfahrens zum Bestimmen des Grundladedrucks aufweisen. Die Steuervorrichtung kann außerdem einen Speicher, beispielsweise einen Datenspeicher, aufweisen, in dem Kennfelder, Modelle und andere zum Ausführen des oben beschriebenen Verfahrens zum Bestimmen des Grundladedrucks notwendige Parameter und Informationen hinterlegt sein können. Weiterhin kann die Motorsteuerung einen Dateneingang zum Empfangen von Messdaten oder anderen Parametern und einen Datenausgang zum Ausgeben des bestimmten Grundladedrucks oder zum Steuern einer Drosselklappe und des Turboladers aufweisen.

**[0040]** Die vorliegende Erfindung betrifft weiterhin eine Verbrennungskraftmaschine mit einem Gasführungssystem mit einem Turbolader, der einen Verdichter, eine Turbine, eine den Verdichter und die Turbine verbindende Welle und ein Turboladerstellglied zum Variieren einer Strömungsgeschwindigkeit durch die Turbine oder eines Druckverhältnisses über der Turbine aufweist, und wobei das Gasführungssystem eine in Strömungsrichtung nachfolgend des Verdichters angeordnete Drosselklappe umfasst, wobei die Verbrennungskraftmaschine die oben beschriebene Motorsteuerung aufweist. Die Verbrennungskraftmaschine kann ein Ottomotor, ein nach dem Miller-Verfahren arbeitender Verbrennungsmotor oder ein Dieselmotor sein oder enthalten.

**[0041]** Die vorliegende Erfindung betrifft weiterhin ein Kraftfahrzeug mit der oben beschriebenen Verbrennungskraftmaschine.

**[0042]** Ausführungsbeispiele der Erfindung werden nun beispielhaft und unter Bezugnahme auf die beigefügten Zeichnungen beschrieben. Es zeigen:

Fig. 1 einen schematischen Aufbau einer Verbrennungskraftmaschine und eines Gasführungssystems dieser mit einem Turbolader mit Wastegate;

Fig. 2 ein schematisches Flussdiagramm eines Verfahrens zum Bestimmen des Grundladedrucks des Gasführungssystems der Verbrennungskraftmaschine aus Fig. 1;

Fig. 3 ein schematisches Flussdiagramm eines Verfahrens zum Bestimmen einer Turbinendrehzahl;

Fig. 4 eine schematische Darstellung eines Turbinenkennfelds bei geöffnetem Wastegateventil;

Fig. 5 ein schematisches Flussdiagramm eines Verfahrens zum Bestimmen eines Druckverhältnisses;

Fig. 6 eine schematische Darstellung eines Verdichterkennfelds bei geöffnetem Wastegateventil; und

Fig. 7 einen schematischen Aufbau einer Verbrennungskraftmaschine und eines Gasführungssystems dieser mit einem Turbolader mit variabler Turbinengeometrie.

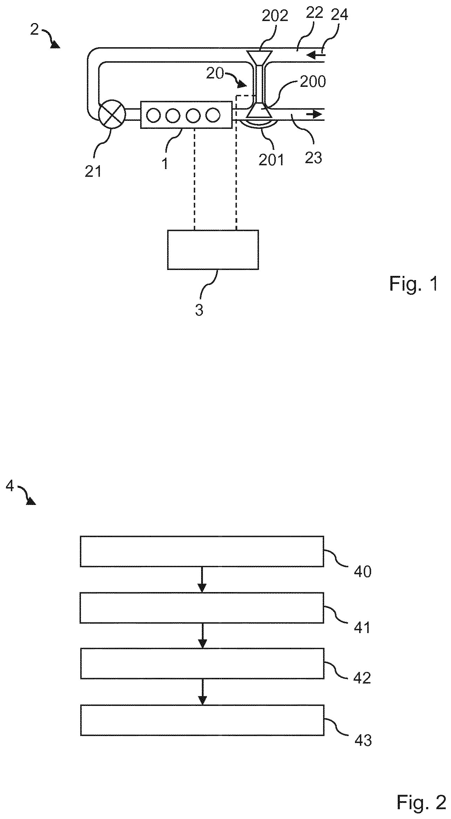

**[0043]** Fig. 1 zeigt eine Verbrennungskraftmaschine 1 und ein erstes Ausführungsbeispiel eines Gasführungssystems 2 der Verbrennungskraftmaschine 1. Das Gasführungssystem 2 weist einen Abgasturbolader 20, eine Drosselklappe 21, einen Ansaugkanal 22 und einen Abgaskanal 23 auf. Die Verbrennungskraftmaschine 1 ist mit dem Ansaugkanal 21 und mit dem Abgaskanal 23 verbunden. Der Abgasturbolader 20, der zur Regelung eines Ladedrucks in dem Ansaugkanal 22 vorgesehen ist, weist eine Turbine 200, ein Wastegate 201 und einen Verdichter 202, der über eine Welle mit der Turbine 200 verbunden ist, auf. Die Turbine 200 ist in dem Abgaskanal 23 angeordnet und wird durch aus der Verbrennungskraftmaschine 1 ausströmendes Abgas angetrieben. Das Wastegate 201 verbindet einen Abschnitt des Abgaskanals 23 vor der Turbine 200 mit einem Abschnitt des Abgaskanals 23 nach der Turbine 200, um Abgas an der Turbine 200 vorbeizuleiten. Zum Regeln des an der Turbine 200 vorbeigeleiteten Abgases weist das Wastegate 201 ein Wastegateventil (nicht gezeigt) auf. Der Verdichter 202 ist im Ansaugkanal 22 angeordnet und verdichtet, angetrieben von der Turbine 200, die Frischluft in dem Ansaugkanal 22. Die Drosselklappe 21 ist in Strömungsrichtung (Pfeil 24) nach dem Verdichter 202 des Abgasturboladers 20 in dem Ansaugkanal 22 angeordnet und dazu ausgebildet, den Ladedruck in dem Ansaugkanal 22 zu steuern.

**[0044]** Fig. 1 zeigt weiterhin eine Motorsteuerung 3. Die Motorsteuerung 3 ist jeweils mit der Verbrennungskraftmaschine 1, dem Wastegateventil im Wastegate 201 und der Drosselklappe 21 verbunden. Die Motorsteuerung 3 ist dazu ausgebildet, die Verbrennungskraftmaschine 1, das Wastegateventil und die Drosselklappe 21 zu steuern. Dazu bestimmt die Motorsteuerung 3 einen Grundladedruck des Gasführungssystems 2 gemäß dem mit Bezug auf Fig. 2 bis Fig. 6 beschriebenen Verfahren 4 zum Bestimmen des Grundladedrucks und nutzt diesen für die Steuerung der Verbrennungskraftmaschine 1 und des Gasführungssystems 2, also des Wastegateventils und der Drosselklappe.

**[0045]** Fig. 2 zeigt ein Flussdiagramm eines Verfahrens 4 zum Bestimmen des Grundladedrucks in dem in Fig. 1 gezeigten Gasführungssystem 2.

**[0046]** Bei 40 wird ein Abgasgegendruck vor der Turbine in einem Zustand modelliert, in dem das Wastegateventil vollständig geöffnet ist und die Strömungsgeschwindigkeit durch die Turbine und das Wastegate minimal ist.

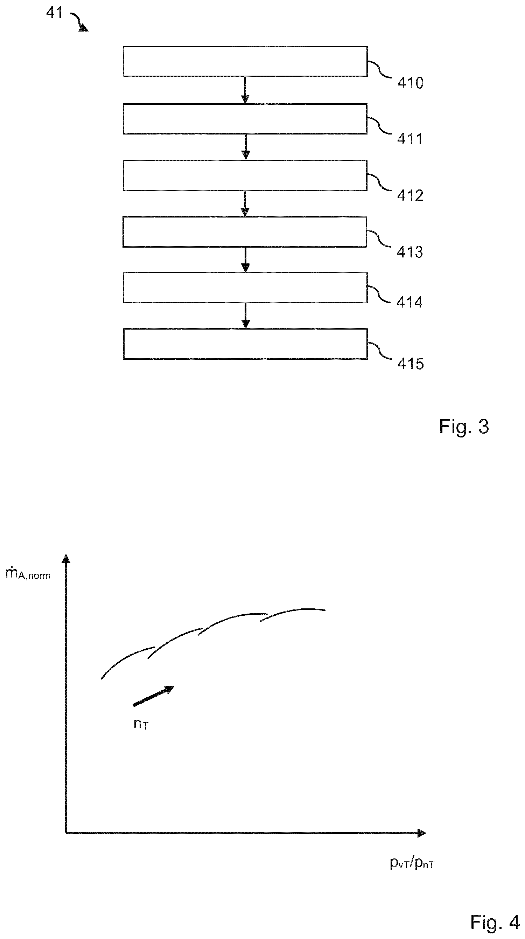

**[0047]** Bei 41 wird die Turbinendrehzahl in Abhängigkeit des Abgasgegendrucks bei vollständig geöffnetem Wastegateventil bestimmt. Zum Beispiel kann die Turbinendrehzahl mittels des mit Bezug auf Fig. 3 und Fig. 4 beispielhaft beschriebenen Verfahrens bestimmt wer-

Bei 410 in Fig. 3 wird mittels eines Modells ein Druck im Abgaskanal nach der Turbine modelliert. Aus dem Abgasgegendruck bei vollständig geöffnetem Wastegateventil und dem modellierten Druck nach der Turbine wird bei 411 das Druckverhältnis über der Turbine berechnet. Dazu wird der Abgasgegendruck bei vollständig geöffnetem Wastegateventil durch den modellierten Druck nach der Turbine dividiert.

Bei 412 wird mittels eines Modells der Abgasmassenstrom durch den Abgaskanal bzw. die Turbine und das Wastegate modelliert. Bei 413 wird die Abgastemperatur des Abgases in dem Abgaskanal bestimmt. Aus dem Abgasmassenstrom und der Abgastemperatur wird dann bei 414 der normierte Abgasmassenstrom bestimmt.

Bei 415 wird aus dem Druckverhältnis bei vollständig geöffnetem Wastegateventil mittels eines Turbinenkennfelds die Turbinendrehzahl bestimmt. Das Turbinenkennfeld ist über dem Druckverhältnis bei vollständig geöffnetem Wastegateventil und dem normierten Abgasmassenstrom aufgespannt und ermöglicht ein Ablesen der Turbinendrehzahl. In Fig. 4 ist beispielhaft eine schematische Darstellung eines Turbinenkennfeldes dargestellt. Auf einer horizontalen Achse (x-Achse) ist das Druckverhältnis $p_{vT}/p_{nT}$ und auf einer vertikalen Achse (y-Achse) der normierte Abgasmassenstrom $\dot{m}_{A,norm}$ aufgetragen. Das Turbinenkennfeld zeigt für unterschiedliche Turbinendrehzahlen $n_T$ die Veränderung des normierten Abgasmassenstroms $\dot{m}_{A,norm}$ in Abhängigkeit des Druckverhältnisses $p_{vT}/p_{nT}$. Für jede Turbinendrehzahl $n_T$ steigt mit steigendem Druckverhältnis $p_{vT}/p_{nT}$ der Abgasmassenstrom $\dot{m}_{A,norm}$ mit abnehmender Steigung an. Je größer die Turbinendrehzahl $n_T$, desto höher der Abgasmassenstrom $\dot{m}_{A,norm}$. Aus diesem Turbinenkennfeld kann die Turbinendrehzahl $n_T$ bestimmt werden.

Bei 42 in Fig. 2 wird die Turbinendrehzahl $n_T$ bei vollständig geöffnetem Wastegateventil auf die Verdichterdrehzahl $n_V$ bei vollständig geöffnetem Wastegateventil übertragen. Da die Welle des Turboladers die Turbine und den Verdichter fest verbindet, entspricht die Turbinendrehzahl $n_T$ immer der Verdichterdrehzahl $n_V$ und die beiden Drehzahlen können gleichgesetzt werden.

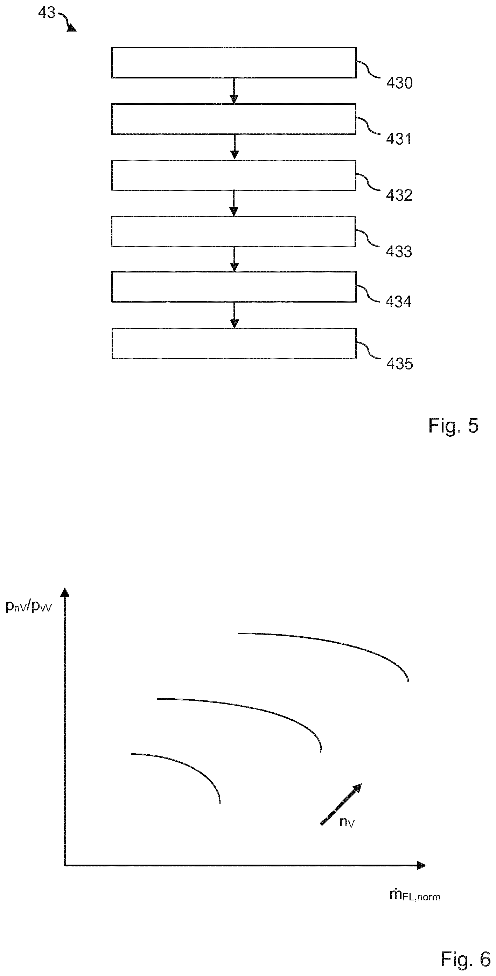

Bei 43 wird der Grundladedruck in Abhängigkeit der Verdichterdrehzahl bestimmt. Zum Beispiel kann der Grundladedruck mittels des mit Bezug auf Fig. 5 und Fig. 6 beispielhaft beschriebenen Verfahrens bestimmt werden.

Bei 430 wird der Frischluftmassenstrom durch den Ansaugkanal bzw. den Verdichter gemessen. Alternativ kann der Frischluftmassenstrom auch modelliert werden. Bei 431 wird die Frischlufttemperatur der durch den Ansaugkanal bzw. den Verdichter strömenden Frischluft gemessen. Aus dem Frischluftmassenstrom und der Frischlufttemperatur wird bei 432 der normierte Frischluftmassenstrom bestimmt.

Bei 433 wird mittels eines Verdichterkennfelds in Abhängigkeit der Verdichterdrehzahl bei vollständig geöffnetem Wastegateventil und dem normierten Frischluftmassenstrom das Druckverhältnis über dem Verdichter bei vollständig geöffnetem Wastegateventil bestimmt. Das Verdichterkennfeld wird über dem normierten Frischluftmassenstrom und dem Druckverhältnis über dem Verdichter aufgespannt und ermöglicht das Ablesen des Druckverhältnisses für unterschiedliche Verdichterdrehzahlen. In Fig. 6 ist beispielhaft eine schematische Darstellung eines Verdichterkennfelds dargestellt. Auf einer horizontalen Achse (x-Achse) ist der normierte Frischluftmassenstrom $\dot{m}_{FL,norm}$ und auf einer vertikalen Achse (y-Achse) das Druckverhältnis $p_{nV}/p_{vV}$ über dem Verdichter aufgetragen. Das Kennfeld zeigt für unterschiedliche Verdichterdrehzahlen $n_V$ die Veränderung des Druckverhältnisses in Abhängigkeit des Druckverhältnisses $p_{rV}/p_{vV}$. Für jede Verdichterdrehzahl nimmt mit steigendem normiertem Frischluftmassenstrom $\dot{m}_{FL,norm}$ das Druckverhältnis $p_{nV}/p_{vV}$ mit zunehmender Steigung ab. Je größer die Verdichterdrehzahl $n_V$, desto höher der Frischluftmassenstrom $\dot{m}_{FL,norm}$. Aus diesem Verdichterkennfeld kann das Druckverhältnis $p_{nV}/p_{vV}$ für die Verdichterdrehzahl $n_V$ bei vollständig geöffnetem Wastegateventil bestimmt werden.

Bei 434 wird mittels eines Modells der Druck in dem Ansaugkanal vor dem Verdichter bestimmt. Der Druck vor dem Verdichter wird über ein Modell abgebildet, welches auf dem Umgebungsdruck basiert, wobei von diesem ein Druckverlust modelliert und abgezogen wird, der einem passiven Strömungswiderstand eines Luftfilters in der Ansaugleitung entspricht.

Bei 435 wird aus dem Druckverhältnis über dem Verdichter und dem Druck vor dem Verdichter der Grundladedruck berechnet. Dazu wird das Druckverhältnis über dem Verdichter mit dem Druck vor dem Verdichter multipliziert.

Der bestimmte Grundladedruck kann dann zum Steuern der Drosselklappe, des Turboladers und der Verbrennungskraftmaschine eingesetzt werden.

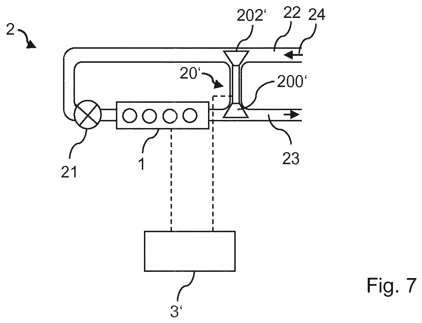

Fig. 7 zeigt eine Verbrennungskraftmaschine 1 und ein zweites Ausführungsbeispiel eines Gasführungssystems 2' der Verbrennungskraftmaschine 1. Das Gasführungssystem 2' weist anstelle des in Fig. 1 dargestellten Turboladers 20 mit Wastegate 201 einen VTG-Turbolader 20' (Variable-Turbinengeometrie-Lader) auf. Der VTG-Turbolader 20' ist mit einer variablen Turbinengeometrie versehen, so dass sich Turbinenschaufeln (nicht gezeigt) der Turbine 200' zwischen einer flachst möglichen Einstellung und einer steilst möglichen Einstellung einstellen lassen. In der flachst möglichen Einstellung ist ein Abgasgegendruck vor der Turbine 200 maximal, während der Abgasgegendruck vor der Turbine 200 in der steilst möglichen Einstellung minimal ist.

Die Motorsteuerung 3' ist dazu ausgebildet, ein Verfahren zum Bestimmen des Grundladedrucks auszuführen. Dabei wird das mit Bezug auf Fig. 2 bis Fig. 6 beschriebene Verfahren analog durchgeführt, wobei der Abgasgegendruck bei der steilst möglichen Einstellung der Leitschaufeln anstelle des Abgasgegendruck bei vollständig geöffnetem Wastegateventil angenommen wird. Auf Grundlage des Bestimmten Grundladedrucks steuert die Motorsteuerung 3' dann die Leitschaufeln der Turbine, die Drosselklappe und die Verbrennungskraftmaschine.

**Bezugszeichenliste**

| | |
|---|---|
| 1 | Verbrennungskraftmaschine |
| 2 | Gasführungssystem |
| 20, 20' | Turbolader |
| 200, 200' | Turbine |
| 201 | Wastegate |
| 202, 202' | Verdichter |
| 21 | Drosselklappe |
| 22 | Ansaugkanal |
| 23 | Abgaskanal |
| 24 | Strömungsrichtung |
| 3, 3' | Motorsteuerung |
| 4 | Verfahren zum Bestimmen des Grundladedrucks |
| 40 | Modellieren des Abgasgegendruck bei vollständig geöffnetem Wastegateventil |
| 41 | Bestimmen der Turbinendrehzahl in Abhängigkeit des Abgasgegendrucks |
| 410 | Bestimmen des Drucks vor der Turbine |
| 411 | Berechnen des Druckverhältnisses über der Turbine |
| 412 | Modellieren des Abgasmassenstroms |
| 413 | Bestimmen der Abgastemperatur |
| 414 | Bestimmen des normierten Abgasmassenstroms |
| 415 | Bestimmen der Turbinendrehzahl mittels eines Turbinenkennfelds |
| 42 | Übertragen der Turbinendrehzahl auf die Verdichterdrehzahl |
| 43 | Bestimmen des Grundladedrucks in Abhängigkeit der Verdichterdrehzahl |
| 430 | Messen des Frischluftmassenstroms |
| 431 | Messen der Frischlufttemperatur |
| 432 | Bestimmen des normierten Frischluftmassenstroms |
| 433 | Bestimmen eines Druckverhältnisses mittels eines Verdichterkennfelds |
| 434 | Bestimmen des Drucks vor dem Verdichter |
| 435 | Berechnen des Grundladedrucks |

**Patentansprüche**

1. Verfahren zum Bestimmen eines Grundladedrucks eines Gasführungssystems (2) einer Verbrennungskraftmaschine (1) mit einem Turbolader (20), der einen Verdichter (202), eine Turbine (200), eine den Verdichter (202) und die Turbine (200) verbindende Welle, und ein Turboladerstellglied zum Variieren einer Strömungsgeschwindigkeit durch die Turbine (200) oder eines Druckverhältnisses über der Turbine (200) aufweist, und wobei das Gasführungssystem (2) eine in Strömungsrichtung nachfolgend des Verdichters (202) angeordnete Drosselklappe (21) umfasst, umfassend:

Berechnen (40) eines Abgasgegendrucks bei geöffneter Turboladerstellgliedposition, wobei die Strömungsgeschwindigkeit durch oder das Druckverhältnis über der Turbine (200) in der geöffneten Turboladerstellgliedposition minimal ist, wobei der Abgasgegendruck ein Druck vor der Turbine (200) ist; und Bestimmen (43) des Grundladedrucks in Abhängigkeit des berechneten Abgasgegendrucks bei geöffneter Turboladerstellgliedposition, wobei der Grundladedruck ein Ladedruck ist, der herrscht, wenn die Drosselklappe (21) des Gasführungssystems (2) maximal geöffnet ist und sich das Turboladerstellglied in der geöffneten Turboladerstellgliedposition befindet, und der Ladedruck einem Druck nach dem Verdichter (202) und vor der Drosselklappe (21) entspricht, und wobei das Verfahren mittels einer Motorsteuerung durchgeführt wird.

2. Verfahren nach Anspruch 1, wobei

der Turbolader ein Variable-Turbinengeometrie-Lader (20') mit verstellbaren Leitschaufeln als Stellglieder ist und sich die Leitschaufeln in der geöffneten Turboladerstellgliedposition in der steilsten Stellung befinden; und/oder der Turbolader (20) ein Wastegate (201) mit einem Ventil als Stellglied aufweist, das bei geöffneter Turboladerstellgliedposition vollständig geöffnet ist.

3. Verfahren nach Anspruch 1 oder 2, wobei der Abgasgegendruck mittels eines Abgasgegendruckmodells bei geöffneter Turbinenstellgliedposition oder mittels eines Wastegate-Modells bei geöffneter Turbinenstellgliedposition bestimmt wird.

4. Verfahren nach Anspruch 3, weiterhin umfassend:

Bestimmen (41) einer Turbinendrehzahl bei geöffneter Turboladerstellgliedposition in Abhängigkeit des modellierten Abgasgegendrucks bei geöffneter Turboladerstellgliedposition, wobei der Grundladedruck in Abhängigkeit der bestimmten Turbinendrehzahl bei geöffneter Turboladerstellgliedposition bestimmt wird.

**5.** Verfahren nach Anspruch 4, weiterhin umfassend:

Bestimmen (411) eines Druckverhältnisses über der Turbine in Abhängigkeit des modellierten Abgasgegendrucks bei geöffneter Turboladerstellgliedposition;
Bestimmen (412, 413, 414) eines Abgasmassenstroms, insbesondere eines normierten Abgasmassenstroms; und
Bestimmen (415) der Turbinendrehzahl in Abhängigkeit des Druckverhältnisses und des Abgasmassenstroms.

**6.** Verfahren nach einem der Ansprüche 4 oder 5, wobei
die Turbinendrehzahl mittels eines Drehzahlmodells, insbesondere eines Turbinenkennfelds, bestimmt wird (415).

**7.** Verfahren nach einem der Ansprüche 4 bis 6, wobei eine Verdichterdrehzahl bei geöffneter Turboladerstellgliedposition einer Turbinendrehzahl bei geöffneter Turboladerstellgliedposition entspricht.

**8.** Verfahren nach Anspruch 3, umfassend:

Bestimmen einer Verdichterdrehzahl bei geöffneter Turboladerstellgliedposition in Abhängigkeit des modellierten Abgasgegendrucks bei geöffneter Turboladerstellgliedposition, wobei
der Grundladedruck in Abhängigkeit der bestimmten Verdichterdrehzahl bei geöffneter Turboladerstellgliedposition bestimmt wird.

**9.** Verfahren nach einem der Ansprüche 4 oder 7, weiterhin umfassend:

Erhalten (430, 431, 432) eines Frischluftmassenstroms, insbesondere Bestimmen eines normierten Frischluftmassenstroms; und
Bestimmen (433) eines Druckverhältnisses bei geöffneter Turboladerstellgliedposition über dem Verdichter in Abhängigkeit der Verdichterdrehzahl bei geöffneter Turboladerstellgliedposition und des Frischluftmassenstroms, wobei
der Grundladedruck in Abhängigkeit des Druckverhältnisses über dem Verdichter bestimmt wird.

**10.** Verfahren nach Anspruch 9, wobei
der Frischluftmassenstrom gemessen oder modelliert wird (430).

**11.** Verfahren nach Anspruch 9, wobei
das Druckverhältnis über dem Verdichter mittels eines Verdichterkennfelds bestimmt wird (433).

**12.** Verfahren nach einem der Ansprüche 9 bis 11, weiterhin umfassend:

Bestimmen (434) eines Vor-Verdichter-Drucks vor dem Verdichter, wobei
der Grundladedruck in Abhängigkeit des Druckverhältnisses über dem Verdichter bei geöffneter Turboladerstellgliedposition und des bestimmten Vor-Verdichter-Drucks bestimmt wird.

**13.** Motorsteuerung (3) für eine Verbrennungskraftmaschine (1) mit einem Gasführungssystem (2) mit einem Turbolader (20), der einen Verdichter (202), eine Turbine (200), eine den Verdichter (202) und die Turbine (202) verbindende Welle und ein Turboladerstellglied zum Variieren einer Strömungsgeschwindigkeit durch die Turbine (200) oder eines Druckverhältnisses über der Turbine (200) aufweist, wobei das Gasführungssystem (2) eine in Strömungsrichtung nachfolgend des Verdichters (202) angeordnete Drosselklappe (21) umfasst, wobei die Motorsteuerung (3) dazu ausgebildet ist, ein Verfahren (4) zum Bestimmen eines Grundladedrucks eines Gasführungssystems der Verbrennungskraftmaschine nach einem der Ansprüche 1 bis 12 durchzuführen.

**14.** Verbrennungskraftmaschine (1) mit einem Gasführungssystem (2) mit einem Turbolader (20), der einen Verdichter (202), eine Turbine (200), eine den Verdichter (202) und die Turbine (202) verbindende Welle und ein Turboladerstellglied zum Variieren einer Strömungsgeschwindigkeit durch die Turbine (200) oder eines Druckverhältnisses über der Turbine (200) aufweist, wobei das Gasführungssystem (2) eine in Strömungsrichtung nachfolgend des Verdichters (202) angeordnete Drosselklappe (21) umfasst, wobei die Verbrennungskraftmaschine eine Motorsteuerung (3) nach Anspruch 13 aufweist.

**15.** Kraftfahrzeug mit einer Verbrennungskraftmaschine (1) nach Anspruch 14.

**Claims**

**1.** Method for determining a base boost pressure of a gas conduction system (2) of an internal combustion engine (1) with a turbocharger (20) which has a compressor (202), a turbine (200), a shaft connecting the compressor (202) and the turbine (200), and a turbocharger control element for varying a flow velocity through the turbine (200) or a pressure ratio across the turbine (200), wherein the gas conduction system (2) comprises a throttle valve (21) arranged downstream of the compressor (202) in the flow direction, the method comprising:

calculating (40) an exhaust gas back-pressure with the turbocharger control element in the open position, wherein the flow velocity through or the pressure ratio across the turbine (200) is minimal in the open turbocharger control element position, wherein the exhaust gas back-pressure is a pressure upstream of the turbine (200); and
determining (43) the base boost pressure on the basis of the calculated exhaust gas back-pressure with the turbocharger control element in the open position,
wherein the base boost pressure is a boost pressure that prevails when the throttle valve (21) of the gas conduction system (2) is maximally open and the turbocharger control element is in the open turbocharger control element position, and the boost pressure corresponds to a pressure downstream of the compressor (202) and upstream of the throttle valve (21), and wherein the method is performed by means of an engine control unit.

2. Method according to claim 1, wherein

the turbocharger is a variable-geometry turbocharger (20') with adjustable guide vanes as control elements and the guide vanes are in the steepest position when the turbocharger control element is in the open position; and/or the turbocharger (20) has a wastegate (201) with a valve as a control element, which valve is fully open with the turbocharger control element in the open position.

3. Method according to claim 1 or 2, wherein
the exhaust gas back-pressure is determined by means of an exhaust gas back-pressure model with the turbine control element in the open position or by means of a wastegate model with the turbine control element in the open position.

4. Method according to claim 3, further comprising:

determining (41) a turbine speed with the turbocharger control element in the open position on the basis of the modeled exhaust gas back-pressure with the turbocharger control element in the open position, wherein
the base boost pressure is determined on the basis of the determined turbine speed with the turbocharger control element in the open position.

5. Method according to claim 4, further comprising:

determining (411) a pressure ratio across the turbine on the basis of the modeled exhaust gas back-pressure with the turbocharger control element in the open position;
determining (412, 413, 414) an exhaust gas mass flow rate, in particular a normalized exhaust gas mass flow rate; and
determining (415) the turbine speed on the basis of the pressure ratio and the exhaust gas mass flow rate.

6. Method according to either of claims 4 and 5, wherein the turbine speed is determined (415) by means of a speed model, in particular a turbine characteristic map.

7. Method according to any of claims 4 to 6, wherein a compressor speed with the turbocharger control element in the open position corresponds to a turbine speed with the turbocharger control element in the open position.

8. Method according to claim 3, comprising:

determining a compressor speed with the turbocharger control element in the open position on the basis of the modeled exhaust gas back-pressure with the turbocharger control element in the open position, wherein
the base boost pressure is determined on the basis of the determined compressor speed with the turbocharger control element in the open position.

9. Method according to either of claims 4 and 7, further comprising:

obtaining (430, 431, 432) a fresh air mass flow rate, in particular determining a normalized fresh air mass flow rate; and
determining (433) a pressure ratio across the compressor with the turbocharger control element in the open position on the basis of the compressor speed with the turbocharger control element in the open position and the fresh air mass flow rate, wherein
the base boost pressure is determined on the basis of the pressure ratio across the compressor.

10. Method according to claim 9, wherein
the fresh air mass flow rate is measured or modeled (430).

11. Method according to claim 9, wherein
the pressure ratio across the compressor is determined (433) by means of a compressor characteristic map.

12. Method according to any of claims 9 to 11, further comprising:

determining (434) a compressor-upstream pressure upstream of the compressor, wherein the base boost pressure is determined on the basis of the pressure ratio across the compressor with the turbocharger control element in the open position and the determined compressor-upstream pressure.

13. Engine control unit (3) for an internal combustion engine (1) comprising a gas conduction system (2) with a turbocharger (20) which has a compressor (202), a turbine (200), a shaft connecting the compressor (202) and the turbine (202), and a turbocharger control element for varying a flow velocity through the turbine (200) or a pressure ratio across the turbine (200), wherein the gas conduction system (2) comprises a throttle valve (21) arranged downstream of the compressor (202) in the flow direction, wherein the engine control unit (3) is designed to perform a method (4) for determining a base boost pressure of a gas conduction system of the internal combustion engine according to any of claims 1 to 12.

14. Internal combustion engine (1) comprising a gas conduction system (2) with a turbocharger (20) which has a compressor (202), a turbine (200), a shaft connecting the compressor (202) and the turbine (202), and a turbocharger control element for varying a flow velocity through the turbine (200) or a pressure ratio across the turbine (200), wherein the gas conduction system (2) comprises a throttle valve (21) arranged downstream of the compressor (202) in the flow direction, wherein the internal combustion engine has an engine control unit (3) according to claim 13.

15. Motor vehicle comprising an internal combustion engine (1) according to claim 14.

**Revendications**

1. Procédé pour la détermination d'une pression d'admission de base d'un système de guidage de gaz (2) d'un moteur à combustion interne (1) comportant un turbocompresseur (20) présentant un compresseur (202), une turbine (200), un arbre reliant le compresseur (202) et la turbine (200), et un actionneur de turbocompresseur permettant la variation d'une vitesse d'écoulement à travers la turbine (200) ou un rapport de pression à travers la turbine (200), et dans lequel le système de guidage de gaz (2) comprend un papillon des gaz (21) disposé en aval du compresseur (202) dans le sens d'écoulement, comprenant :

le calcul (40) d'une contre-pression de gaz d'échappement dans la position d'actionneur de turbocompresseur ouverte, dans lequel la vitesse d'écoulement ou le rapport de pression à travers la turbine (200) est minimal dans la position d'actionneur de turbocompresseur ouverte, dans lequel la contre-pression de gaz d'échappement est une pression en amont de la turbine (200) ; et

la détermination (43) de la pression d'admission de base en fonction de la contre-pression de gaz d'échappement calculée dans la position d'actionneur de turbocompresseur ouverte, dans lequel la pression d'admission de base est une pression d'admission qui règne lorsque le papillon des gaz (21) du système de guidage de gaz (2) est ouvert au maximum et que l'actionneur de turbocompresseur se trouve dans la position d'actionneur de turbocompresseur ouverte, et la pression d'admission correspond à une pression en aval du compresseur (202) et en amont du papillon des gaz (21), et dans lequel le procédé est mis en œuvre au moyen d'un dispositif de commande de moteur.

2. Procédé selon la revendication 1, dans lequel

le turbocompresseur est un compresseur d'alimentation à géométrie variable de turbine (20') comportant des aubes directrices réglables en tant qu'actionneurs, et les aubes directrices se trouvent dans la position la plus inclinée dans la position d'actionneur de turbocompresseur ouverte ; et/ou le turbocompresseur (20) présente une soupape de décharge (201) comportant une soupape en tant qu'actionneur, laquelle est complètement ouverte dans la position d'actionneur de turbocompresseur ouverte.

3. Procédé selon la revendication 1 ou 2, dans lequel la contre-pression de gaz d'échappement est déterminée au moyen d'un modèle de contre-pression de gaz d'échappement dans la position d'actionneur de turbocompresseur ouverte ou au moyen d'un modèle de soupape de décharge dans la position d'actionneur de turbocompresseur ouverte.

4. Procédé selon la revendication 3, comprenant en outre :

la détermination (41) d'une vitesse de rotation de turbine dans la position d'actionneur de turbocompresseur ouverte en fonction de la contre-pression de gaz d'échappement modélisée dans la position d'actionneur de turbocompresseur ouverte, dans lequel la pression d'admission de base est déterminée en fonction de la vitesse de rotation de turbine déterminée dans la position d'actionneur de turbocompresseur ouverte.

5. Procédé selon la revendication 4, comprenant en outre :

la détermination (411) d'un rapport de pression à travers la turbine en fonction de la contre-pression de gaz d'échappement modélisée dans la position d'actionneur de turbocompresseur ouverte ;
la détermination (412, 413, 414) d'un débit massique de gaz d'échappement, en particulier d'un débit massique de gaz d'échappement normalisé ; et
la détermination (415) de la vitesse de rotation de turbine en fonction du rapport de pression et du débit massique de gaz d'échappement.

6. Procédé selon l'une des revendications 4 ou 5, dans lequel
la vitesse de rotation de turbine est déterminée (415) au moyen d'un modèle de vitesse de rotation, en particulier d'une cartographie de turbine.

7. Procédé selon l'une des revendications 4 à 6, dans lequel
une vitesse de rotation de compresseur dans la position d'actionneur de turbocompresseur ouverte correspond à une vitesse de rotation de turbine dans la position d'actionneur de turbocompresseur ouverte.

8. Procédé selon la revendication 3, comprenant :

la détermination d'une vitesse de rotation de compresseur dans la position d'actionneur de turbocompresseur ouverte en fonction de la contre-pression de gaz d'échappement modélisée dans la position d'actionneur de turbocompresseur ouverte, dans lequel
la pression d'admission de base est déterminée en fonction de la vitesse de rotation de compresseur déterminée dans la position d'actionneur de turbocompresseur ouverte.

9. Dispositif selon l'une des revendications 4 ou 7, comprenant en outre :

l'obtention (430, 431, 432) d'un débit massique d'air frais, en particulier la détermination d'un débit massique d'air frais normalisé ; et
la détermination (433) d'un rapport de pression dans la position d'actionneur de turbocompresseur ouverte à travers le compresseur en fonction de la vitesse de rotation de compresseur dans la position d'actionneur de turbocompresseur ouverte et du débit massique d'air frais, dans lequel
la pression d'admission de base est déterminée en fonction du rapport de pression à travers le compresseur.

10. Procédé selon la revendication 9, dans lequel le débit massique d'air frais est mesuré ou modélisé (430).

11. Procédé selon la revendication 9, dans lequel le rapport de pression à travers le compresseur est déterminé (433) au moyen d'une cartographie de compresseur.

12. Dispositif selon l'une des revendications 9 à 11, comprenant en outre :

la détermination (434) d'une pression en amont du compresseur en amont du compresseur, dans lequel
la pression d'admission de base est déterminée en fonction du rapport de pression à travers le compresseur dans la position d'actionneur de turbocompresseur ouverte et de la pression en amont du compresseur déterminée.

13. Dispositif de commande de moteur (3) pour un moteur à combustion interne (1) comportant un système de guidage de gaz (2), comportant un turbocompresseur (20) présentant un compresseur (202), une turbine (200), un arbre reliant le compresseur (202) et la turbine (202) et un actionneur de turbocompresseur permettant la variation d'une vitesse d'écoulement à travers la turbine (200) ou un rapport de pression à travers la turbine (200), dans lequel le système de guidage de gaz (2) comprend un papillon des gaz (21) disposé en aval du compresseur (202) dans le sens d'écoulement, dans lequel le dispositif de commande de moteur (3) est configuré pour mettre en œuvre un procédé (4) pour la détermination d'une pression d'admission de base d'un système de guidage de gaz du moteur à combustion interne selon l'une des revendications 1 à 12.

14. Moteur à combustion interne (1) comportant un système de guidage de gaz (2), comportant un turbocompresseur (20) présentant un compresseur (202), une turbine (200), un arbre reliant le compresseur (202) et la turbine (202) et un actionneur de turbocompresseur permettant la variation d'une vitesse d'écoulement à travers la turbine (200) ou un rapport de pression à travers la turbine (200), dans lequel le système de guidage de gaz (2) comprend un papillon des gaz (21) disposé en aval du compresseur (202) dans le sens d'écoulement, dans lequel le moteur à combustion interne présente un dispositif de commande de moteur (3) selon la revendication 13.

**15.** Véhicule automobile comportant un moteur à combustion interne (1) selon la revendication 14.

Fig. 1

Fig. 2

41

410

411

412

413

414

415

Fig. 3

$\dot{m}_{A,norm}$

$n_T$

$p_{vT}/p_{nT}$

Fig. 4

43

430

431

432

433

434

435

Fig. 5

$p_{nV}/p_{vV}$

$n_V$

$\dot{m}_{FL,norm}$

Fig. 6

Fig. 7

**EP 3 662 152 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10243268 A1
- DE 10235013 A1
- US 20110098876 A1
- US 20150101578 A1